# EUROPEAN PATENT APPLICATION

(11) **EP 4 203 159 A2**
(43) Date of publication of application: **28.06.2023**
(21) Application number: 22750059.2
(22) Date of filing: 04.02.2022
(51) Int. Cl.: H01M 50/249, H01M 50/211, H01M 10/6556, H01M 10/625, H01M 10/613

(54) **BATTERY MODULE, BATTERY PACK INCLUDING SAME, AND VEHICLE**

(30) Priority: 08.02.2021 KR 20210017766
(71) Applicant: LG Energy Solution, Ltd., Seoul 07335 (KR)
(72) Inventor: JU, Eun-Ah, Daejeon 34122 (KR); SEO, Sung-Won, Daejeon 34122 (KR); YUN, Hyeon-Ki, Daejeon 34122 (KR); MUN, Jeong-O, Daejeon 34122 (KR); TANNENBERGER, Guenter, 85123 Pobenhausen (DE); HARASZTOSI, Uwe, 74172 Neckarsulm (DE)
(74) Representative: Hoffmann Eitle
(86) International application number: PCT/KR2022/001782
(87) International publication number: WO 2022/169310

(57) **Abstract**

A battery module according to an embodiment of the present disclosure includes a plurality of battery cell assemblies including at least one battery cell, and a module frame formed in a longitudinal direction of the plurality of battery cell assemblies and accommodating therein the plurality of battery cell assemblies in a row in the longitudinal direction.

## Description

### TECHNICAL FIELD

The present disclosure relates to a battery module, and a battery pack and a vehicle including the same.

The present application claims priority to Korean Patent Application No. 10-2021-0017766 filed on February 8, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack or a battery rack is general.

A conventional battery module includes a plurality of battery cells and a module housing in which the plurality of battery cells are accommodated. A conventional module housing is generally formed of a metal material, and is provided as an assembly of a front frame, a rear frame, an upper frame, a lower frame, and a side frame.

Accordingly, because a conventional module housing is provided as an assembly of a plurality of metal frames, a weight of a battery module increases, a structure is complicated, and an assembly process is also complicated. An increase in weight due to the module housing causes a decrease in energy density per weight of the battery module.

Hence, there is a demand to provide a battery module having a slimmer and simpler structure and capable of increasing energy density per weight, a battery pack and a vehicle including the battery module.

### DISCLOSURE

### Technical Problem

The present disclosure is designed to solve the problems of the related art, and therefore the present disclosure is directed to providing a battery module in which energy density per weight is increased, and a battery pack and a vehicle including the battery module.

The present disclosure is also directed to providing a battery module having a slimmer and simpler structure, and a battery pack and a vehicle including the battery module.

### Technical Solution

In an aspect of the present disclosure, there is provided a battery module including: a plurality of battery cell assemblies including at least one battery cell; and a module frame formed in a longitudinal direction of the plurality of battery cell assemblies and accommodating therein the plurality of battery cell assemblies in a row in the longitudinal direction.

The plurality of battery cell assemblies may include: a first battery cell assembly including the at least one battery cell; and a second battery cell assembly including the at least one battery cell, wherein the first battery cell assembly and the second battery cell assembly are slidably inserted into and mounted on the module frame.

The first battery cell assembly may be slidably inserted into a side of the module frame, and the second battery cell assembly may be slidably inserted into the other side of the module frame.

The battery module may include: a front cover covering a side of the module frame; and a rear cover opposite to the front cover and covering the other side of the module frame.

The front cover may include: a front end plate having a size enough to cover a side of the module frame; a front sealing plate located behind the front end plate and facing the battery cell assembly; and a front sealant applied to an edge of the front sealing plate.

The rear cover may include: a rear end plate having a size enough to cover the other side of the module frame; a rear sealing plate located in front of the rear end plate and facing the battery cell assembly; and a rear sealant applied to an edge of the rear sealing plate.

The module frame may include at least one cooling passage for cooling the plurality of battery cell assemblies.

The at least one cooling passage may be formed in a longitudinal direction of the module frame, and is provided inside a lower portion of the module frame.

In another aspect of the present disclosure, there is also provided a battery pack including a plurality of battery modules according to the above embodiments, wherein the plurality of battery modules are arranged in parallel in a width direction of the module frame, and are connected to one another through bolting between module frames facing each other in the width direction.

In another aspect of the present disclosure, there is also provided a vehicle including at least one battery pack according to the above embodiment.

### Advantageous Effects

According to the above various embodiments, a battery module in which energy density per weight is increased, and a battery pack and a vehicle including the battery module may be provided.

Also, according to the above various embodiments, a battery module having a slimmer and simpler structure, and a battery pack and a vehicle including the battery module may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module according to an embodiment of the present disclosure.
FIG. 2 is an exploded perspective view illustrating the battery module of FIG. 1.
FIG. 3 is a perspective view illustrating a first battery cell assembly of the battery module of FIG. 2.
FIG. 4 is a bottom perspective view illustrating the battery module of FIG. 2.
FIG. 5 is a cross-sectional view illustrating the battery module of FIG. 1.
FIG. 6 is a view for describing an assembly process between a module frame and first and second battery cell assemblies of the battery module of FIG. 1.
FIG. 7 is a view for describing a battery pack according to an embodiment of the present disclosure.
FIG. 8 is a plan view illustrating the battery pack of FIG. 7.
FIG. 9 is a cross-sectional view illustrating the battery pack of FIG. 7.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

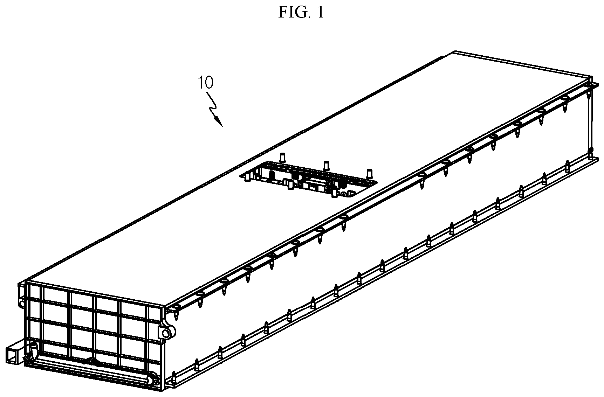

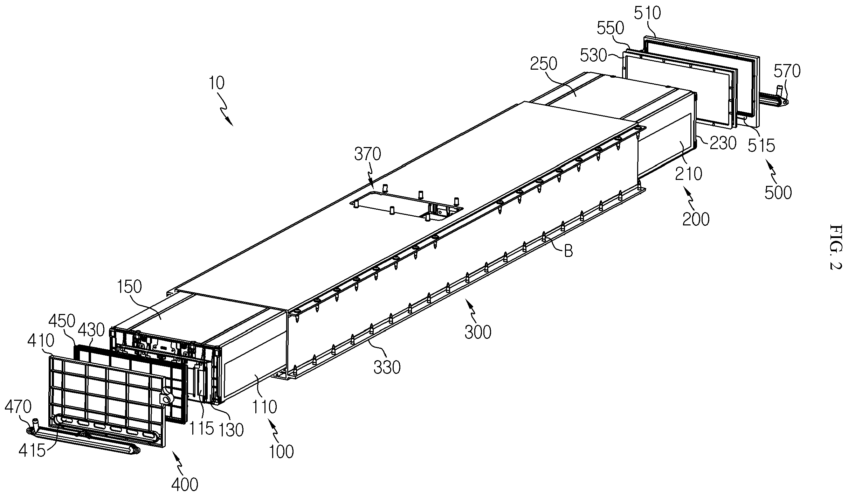

FIG. 1 is a view for describing a battery module according to an embodiment of the present disclosure. FIG. 2 is an exploded perspective view illustrating the battery module of FIG. 1.

Referring to FIGS. 1 and 2, a battery module 10 may include a plurality of battery cell assemblies 100, 200 and a module frame 300.

The plurality of battery cell assemblies 100, 200 may include at least one battery cell 110, 210. The plurality of battery cell assemblies 100, 200 may include a first battery cell assembly 100 and a second battery cell assembly 200.

The first battery cell assembly 100 may include the battery cell 110, a bus bar frame 130, and a top plate 150.

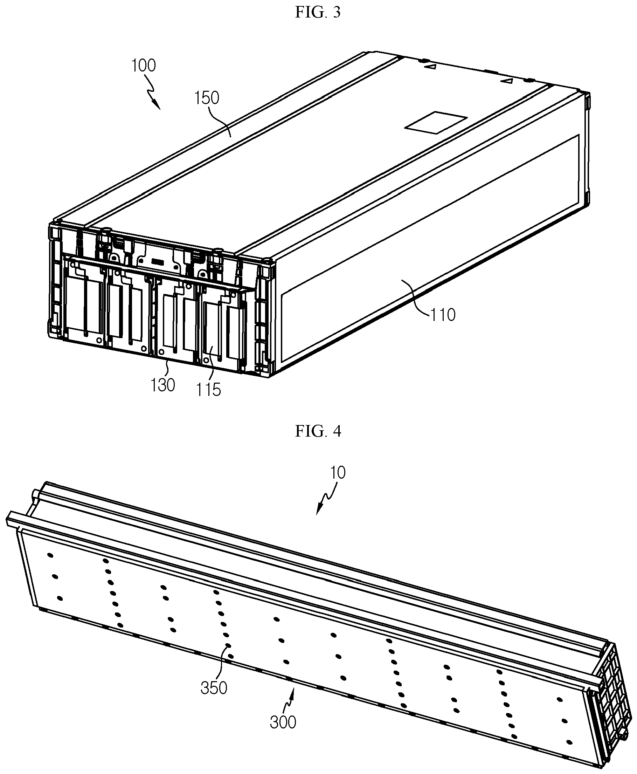

FIG. 3 is a perspective view illustrating the first battery cell assembly of the battery module of FIG. 2.

Referring to FIG. 3 together with FIGS. 1 and 2, the battery cell 110 that is a secondary battery may be provided as a pouch-type secondary battery, a prismatic secondary battery, or a cylindrical secondary battery. The present embodiment will be described assuming that the battery cell 110 is a pouch-type secondary battery.

At least one or more battery cells 110 may be provided. The present embodiment will be described assuming that a plurality of battery cells 110 are provided. The plurality of battery cells 110 may be stacked to be electrically connected to one another.

The bus bar frame 130 may cover at least a side of the battery cells 110, and may be electrically connected to electrode leads 115 of the battery cells 110.

The top plate 150 may cover an upper side of the battery cells 110. The top plate 150 may be formed of a plastic material to insulate the battery cells 110.

Referring back to FIG. 2, the second battery cell assembly 200 may include the battery cell 210, a bus bar frame 230, and a top plate 250.

The battery cell 210 that is a secondary battery may be provided as a pouch-type secondary battery, like the battery cell 110. At least one or more battery cells 210 may be provided. The present embodiment will be described assuming that a plurality of battery cells 210 are provided.

The bus bar frame 230 may cover at least one side of the battery cells 210, and may be electrically connected to electrode leads (not shown) of the battery cells 210.

The top plate 250 may cover an upper side of the battery cells 210. The top plate 250 may be formed of a plastic material to insulate the battery cells 210.

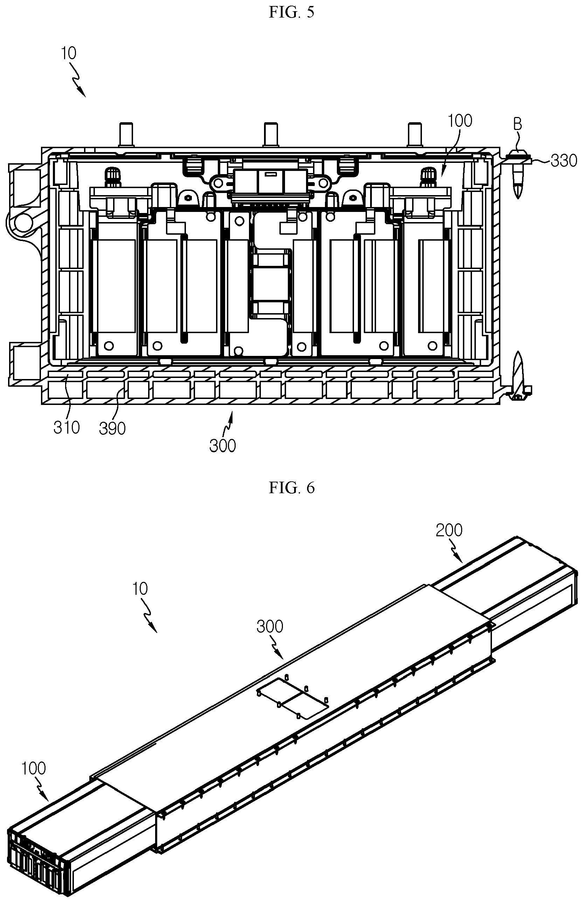

FIG. 4 is a bottom perspective view illustrating the battery module of FIG. 2. FIG. 5 is a cross-sectional view illustrating the battery module of FIG. 1.

Referring to FIGS. 4 and 5 together with FIGS. 1 through 3, the module frame 300 may be formed to have a certain length in a longitudinal direction of the plurality of battery cell assemblies 100, 200, and may integrally accommodate therein the plurality of battery cell assemblies 100, 200 in a row in the longitudinal direction.

In detail, the first battery cell assembly 100 and the second battery cell assembly 200 may be slidably inserted into and mounted on the module frame 300. In more detail, the first battery cell assembly 100 may be slidably inserted into and mounted on a side of the module frame 300, and the second battery cell assembly 200 may be slidably inserted into and mounted on the other side of the module frame 300.

The module frame 300 may include a cooling passage 310, side flanges 330, a thermal adhesive injection hole 350, a connector member connecting portion 370, and a lower reinforcing portion 390.

At least one or more cooling passages 310 may be provided to cool the plurality of battery cell assemblies 100, 200. The present embodiment will be described assuming that a plurality of cooling passages 310 are provided.

The plurality of cooling passages 310 may be formed in a longitudinal direction of the module frame 300, and may be provided inside a lower portion of the module frame 300. The plurality of cooling passages 310 may be spaced apart from one another by a certain distance.

The plurality of cooling passages 310 may be communicatively connected to a front cooling manifold 470 and a rear cooling manifold 570 described below, and a coolant for cooling the battery cell assemblies 100, 200 may circulate in the cooling passages 310.

As such, because the cooling passage 310 is integrally provided in the module frame 300 in the present embodiment, a cooling structure of the battery cells 110, 210 may be implemented even without additional mounting of a member such as a separate heat sink.

Accordingly, in the present embodiment, because an additional member such as a heat sink is omitted, the battery module 10 having a slimmer and simpler structure may be provided, and energy density per weight may be significantly increased.

The side flanges 330 may be provided on both side surfaces of the module frame 300. The side flange 330 may include at least one or more bolting members B for bolting between the module frames 300 facing each other.

A plurality of thermal adhesive injection holes 350 may be provided, and may be formed in a bottom surface of the module frame 300. A thermally conductive adhesive such as a thermal resin may be filled in the module frame 300 through the thermal adhesive injection hole 350. The cooling performance of the battery module 10 may be further improved through the thermally conductive adhesive.

The connector member connecting portion 370 may be provided on a top surface of the module frame 300. The connector member connecting portion 370 may be connected to a connector member 50 described below, and may guide connection between the battery module 10 and a source such as an external power source.

The lower reinforcing portion 390 may be provided under the cooling passage 310. The lower reinforcing portion 390 may be provided in a lattice-shaped rib structure, and may reinforce the structural rigidity of the module frame 300. The lower reinforcing portion 390 may also minimize transmission of external impact or the like to the first battery cell assembly 100 and the second battery cell assembly 200.

The battery module 10 may include a front cover 400 and a rear cover 500.

The front cover 400 may cover a side of the module frame 300. In detail, the front cover 400 may cover a front side of the module frame 300, in the longitudinal direction of the module frame 300.

The front cover 400 may include a front end plate 410, a front sealing plate 430, a front sealant 450, and the front cooling manifold 470.

The front end plate 410 may cover a side of the module frame 300. To this end, the front end plate 410 may have a size enough to cover a side of the module frame 300. In detail, the front end plate 410 may have a size enough to cover a front side of the module frame 300. The front end plate 410 may be adhered to the module frame 300 through welding.

The front end plate 410 may include a connection hole 415.

A plurality of connection holes 415 may be provided. The plurality of connection holes 415 may communicatively connect the front cooling manifold 470 described below to the plurality of cooling passages 310.

The front sealing plate 430 may be located behind the front end plate 410, to face the battery cell assembly 100. In detail, the front sealing plate 430 may be located between the front end plate 410 and the bus bar frame 130 of the first battery cell assembly 100 to seal the first battery cell assembly 100.

The front sealant 450 may be applied to an edge of the front sealing plate 430 to more airtightly seal the battery cell assembly 100. The front sealant 450 may be provided as an adhesive member. However, the present disclosure is not limited thereto, and the front sealant 450 may be provided as a member having a rectangular ring shape for sealing.

The front cooling manifold 470 may be mounted on a lower side of the front end plate 410, and may communicatively connected to the connection hole 415. The front cooling manifold 470 may be connected to an external cooling device, so that the coolant circulates in the cooling passage 310.

The rear cover 500 may cover the other side of the module frame 300. In detail, the rear cover 500 may cover a rear side of the module frame 300, in the longitudinal direction of the module frame 300.

The rear cover 500 may include a rear end plate 510, a rear sealing plate 530, a rear sealant 550, and the rear cooling manifold 570.

The rear end plate 510 may cover the other side of the module frame 300. To this end, the rear end plate 510 may have a size enough to cover the other side of the module frame 300. In detail, the rear end plate 510 may have a size enough to cover a rear side of the module frame 300. The rear end plate 510 may be adhered to the module frame 300 through welding.

The rear end plate 510 may include a connection hole 515.

A plurality of connection holes 515 may be provided. The plurality of connection holes 515 may communicatively connect the rear cooling manifold 570 described below to the plurality of cooling passages 310.

The rear sealing plate 530 may be located in front of the rear end plate 510, to face the battery cell assembly 200. In detail, the rear sealing plate 530 may be located between the rear end plate 510 and the bus bar frame 230 of the second battery cell assembly 200 to seal the second battery cell assembly 200.

The rear sealant 550 may be applied to an edge of the rear sealing plate 530 to more airtightly seal the battery cell assembly 200. The rear sealant 550 may be provided as an adhesive member. The present disclosure is not limited thereto, and the rear sealant 550 may be provided as a member having a rectangular ring shape for sealing.

The rear cooling manifold 570 may be mounted on a lower side of the rear end plate 510, and may be communicatively connected to the connection hole 515. The rear cooling manifold 570 may be connected to an external cooling device or the like, so that the coolant circulates in the cooling passage 310.

FIG. 6 is a view for describing an assembly process between a module frame and first and second battery cell assemblies of the battery module of FIG. 1.

Referring to FIG. 6, in the battery module 10, the first battery cell assembly 100 and the second battery cell assembly 200 may be slidably inserted into and mounted on a side and the other side of the module frame 300, specifically, a front side and a rear side of the module frame 300, and may be accommodated in a row in the module frame 300.

As such, in the module frame 300 of the battery module 10 according to the present embodiment, the battery cell assemblies 100, 200 may be inserted in both directions of the module frame 300. That is, in the battery module 10 according to the present embodiment, a plurality of battery cell assemblies 100, 200 may be integrally accommodated in one single module frame 300.

Accordingly, because a structure of the module frame 300 in which the battery cell assemblies 100, 200 are accommodated may be more simplified, the battery module 10 according to the present embodiment may have a slimmer and simpler structure.

Accordingly, the battery module 10 according to the present embodiment may significantly increase energy density per weight. In addition, because the battery cell assemblies 100, 200 may be slidably inserted and mounted in both directions in the single module frame 300, an assembly process of the battery module 10 according to the present embodiment may be simplified and manufacturing costs may also be significantly reduced.

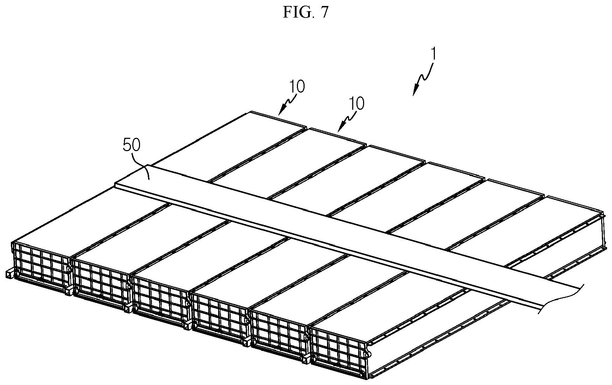

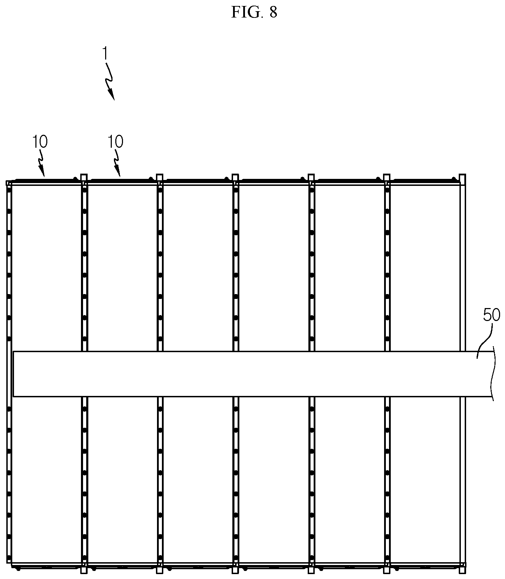

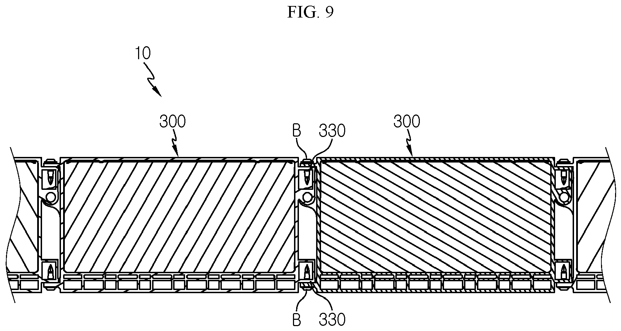

FIG. 7 is a view for describing a battery pack according to an embodiment of the present disclosure. FIG. 8 is a plan view illustrating the battery pack of FIG. 7. FIG. 9 is a cross-sectional view illustrating the battery pack of FIG. 7.

Referring to FIGS. 7 through 9, a battery pack 1 may include a plurality of battery modules 10 and the connector member 50.

The plurality of battery modules 10 may be stacked to be electrically connected to one another. The plurality of battery modules 10 may be arranged in parallel in a width direction of the module frame 300, and are connected to one another through bolting between the module frames 300 facing each other in the width direction. In detail, the plurality of battery modules 10 may be bolted and fixed to one another through the bolting members B at the side flanges 330 of the module frames 300 facing each other.

Also, the side flanges 330 bolted to each other through the bolting members B may function as a cross beam for buffering external impact or the like to the battery pack 1.

The connector member 50 for electrical connection of the plurality of battery modules 10 may be electrically connected to the plurality of battery modules 10 on an upper side of the plurality of battery modules 10. The connector member 50 may be electrically connected to an external power source or the like.

In the battery pack 1 according to the present embodiment, because the plurality of battery modules 10 are bolted and fixed to one another through the bolting members B at the side flanges 330 of the module frames 300 facing each other, an additional member for a separate plate or frame for connection of the battery modules 10 may not be required.

Hence, the battery pack 1 according to the present embodiment may have a slimmer and simpler structure. Accordingly, the battery pack 1 according to the present embodiment may significantly increase energy density per weight through this slim structure.

At least one or more battery packs 1 may be provided and mounted in a vehicle. The vehicle may be an electric vehicle or a hybrid vehicle using the battery pack 1 as an energy source.

Because the vehicle according to the present embodiment includes the at least one battery pack 1, the battery pack 1 having high energy density and a slim and simple structure may be mounted in the vehicle.

Accordingly, the vehicle according to the present embodiment may significantly increase energy density per weight, and the battery pack 1 may be more conveniently mounted in the vehicle.

According to the various embodiments, the battery module 10 in which energy density per weight is increased, and the battery pack 1 and the vehicle including the battery module 10 may be provided.

Also, according to the various embodiments, the battery module 10 having a slimmer and simpler structure, and the battery pack 1 and the vehicle including the battery module 10 may be provided.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery module comprising:
a plurality of battery cell assemblies comprising at least one battery cell; and
a module frame formed in a longitudinal direction of the plurality of battery cell assemblies and accommodating therein the plurality of battery cell assemblies in a row in the longitudinal direction.

2. The battery module according to claim 1, wherein the plurality of battery cell assemblies comprise:
a first battery cell assembly comprising the at least one battery cell; and
a second battery cell assembly comprising the at least one battery cell,
wherein the first battery cell assembly and the second battery cell assembly are slidably inserted into and mounted on the module frame.

3. The battery module according to claim 2, wherein the first battery cell assembly is slidably inserted into a side of the module frame, and
the second battery cell assembly is slidably inserted into the other side of the module frame.

4. The battery module according to claim 2, comprising:
a front cover covering a side of the module frame; and
a rear cover opposite to the front cover and covering the other side of the module frame.

5. The battery module according to claim 4, wherein the front cover comprises:
a front end plate having a size enough to cover a side of the module frame;
a front sealing plate located behind the front end plate and facing the battery cell assembly; and
a front sealant applied to an edge of the front sealing plate.

6. The battery module according to claim 4, wherein the rear cover comprises:
a rear end plate having a size enough to cover the other side of the module frame;
a rear sealing plate located in front of the rear end plate and facing the battery cell assembly; and
a rear sealant applied to an edge of the rear sealing plate.

7. The battery module according to claim 1, wherein the module frame comprises at least one cooling passage for cooling the plurality of battery cell assemblies.

8. The battery module according to claim 7, wherein the at least one cooling passage is formed in a longitudinal direction of the module frame, and is provided inside a lower portion of the module frame.

9. A battery pack comprising a plurality of battery modules according to claim 1,
wherein the plurality of battery modules are arranged in parallel in a width direction of the module frame, and are connected to one another through bolting between module frames facing each other in the width direction.

10. A vehicle comprising at least one battery pack according to claim 9.
